# EUROPÄISCHE PATENTSCHRIFT

(11) **EP 0 632 751 B1**
(45) Veröffentlichungstag und Bekanntmachung des Hinweises auf die Patenterteilung: **03.01.1996**
(21) Anmeldenummer: 93906565.2
(22) Anmeldetag: 19.03.1993
(51) Int. Cl.: B09B 3/00

(54) **VERFAHREN ZUR ENTSORGUNG VON ASBEST ODER ASBESTHALTIGEN STOFFEN**
PROCESS FOR DISPOSAL OF ASBESTOS OR SUBSTANCES CONTAINING IT
PROCEDE D'ELIMINATION DE L'AMIANTE OU DE MATIERES CONTENANT DE L'AMIANTE

(30) Priorität: 23.03.1992 EP 92250068
(43) Veröffentlichungstag der Anmeldung: 11.01.1995
(73) Patentinhaber: Lemmerbrock, Karl-Heinrich, 24613 Wiedenborstel (DE)
(72) Erfinder: GODESBERG, Rolf, D-3394 Langelsheim (DE)
(74) Vertreter: Patentanwälte Wenzel & Kalkoff
(86) Internationale Anmeldenummer: EP9300670
(87) Internationale Veröffentlichungsnummer: WO9318867

(56) Entgegenhaltungen:
- WO-A-88/10234
- WO-A-89/06167
- WO-A-91/00123
- DE-A- 3 728 787
- DE-A- 3 914 553
- KIRK-OTHMER 'Encyclopedia of chemical technology' 1978 , WILEY-INTERSCIENCE , NEW YORK, US, 3rd edition , vol. 3
- SILIKATTECHNIK Bd. 35, Nr. 5, 1984, BERLIN DD Seiten 140 - 142 C. WIEKER 'Chemische, elektronenmikroskopische und röntgenographische Untersuchungen an Chrysotil-Asbest-Proben'
- CHEMICAL ABSTRACTS, vol. 115, no. 4, 29. Juli 1991, Columbus, Ohio, US; abstract no. 34437f, KAWASAKI HIRONOBU 'Treatment of asbestos'

## Beschreibung

Die Erfindung betrifft ein Verfahren zur Entsorgung von Asbest oder asbesthaltigen Stoffen, wobei der Asbest oder die asbesthaltigen Stoffe durch Mahlung in ein nichtfaserige, stabile, mineralische Phasen aufweisendes Material umgewandelt werden.

Wie bekannt, wird durch feinfaserige Aggregate von Asbesten wie Serpentinasbesten (Chrysotil) und Amphibolasbesten eine Erkrankung von Geweben und insbesondere Lungenkrebs verursacht. Der gefahrlosen Entsorgung von Asbest oder asbesthaltigen Stoffen kommt daher große Bedeutung zu. Die Entsorgung von Asbest oder asbesthaltigen Stoffen wird heutzutage mittels Deponierung vorgenommen. Gegebenenfalls wird das Abfallmaterial vor der Ablagerung mit Zement verfestigt. Bei dieser Art der Entsorgung ist es sehr nachteilig, daß eine spätere Freisetzung von Asbest in die Umwelt nicht ausgeschlossen werden kann.

Zwar ist es bekannt, Asbest zul Zerstörung der gesundheitsgefährdenden Faserstruktur thermisch und/oder chemisch mit Säuren zu behandeln und ggf. mechanisch zu beeinflussen. Dazu bekannte Verfahren erfordern jedoch einen relativ hohen Energieeintrag, einen beträchtlichen apparativen Aufwand und/oder relativ lange Behandlungszeiten. Insbesondere müssen Behandlungsparameter wie Zeit und Temperatur in Abhangigkeit voneinander sehr genau aufeinander abgestimmt werden. Auch besteht eine besondere Behandlungsabhängigkeit von den verschiedenen Asbestarten. Bei der Asbestzerkleinerung fällt gesundheitsschädlicher Staub an, und bei einigen chemischen Reaktionen entstehen aufzufangende Abgase. Infolgedessen haben sich bekannte Verfahren, die nachstehend näher spezifiziert werden, in der Praxis nicht durchgesetzt und die an sich angestrebte großtechnische Anwendung nicht zufriedenstellend ermöglicht. Gemäß Kirk-Othmer, Encyclopedia of Chemical Technology, 1978, Wiley-Interscience, New York, US, 3rd edition, Vol. 3, S. 272 wird Chrysotil zunächst bei Hochtemperaturen zur Dehydroxylierung einer thermischen Zersetzung und anschließend einer intensiven Mahlung unterworfen. Aus DE-A-3 914 553 ist es bekannt, die Fasern von Chrysotil und Krokydolith unter relativ hohen Sintertemperaturen bei gleichzeitiger mechanischer Beeinflussung zu versintern. Einige Verfahren schlagen vor, Asbest zur Auflösung der Faserstruktur mit Säuren zu behandeln (WO-A-8 906 167; WO-A-8 810 234) und ggf. zugleich auf Hochtemperaturen zu erwärmen (DE-A-3 728 787) oder mechnaisch zu beeinflussen (JP-A-2 311 381). Gemäß WO-A-9 100 123 wird vorgesehen, angefeuchteten Asbest zur Umwandlung in ein nicht-asbesthaltiges Produkt mit einem wasserlöslichen mineralisierenden Mittel wie insbesondere Borat zu behandlen. Dabei wird der Asbest ggf. geshreddert, bevor die grob zerkleinerten Asbeststücke dem mineralisierenden Mittel ausgesetzt werden.

Der Erfindung liegt demgegenüber die Aufgabe zugrunde, ein verfahrenstechnisch leicht und für die großtechnische Anwendung kostengünstig ausführbares, für alle Asbestarten geeignetes Verfahren zur endgültigen und gefahrlosen Entsorgung von Asbest oder asbesthaltigen Stoffen anzugeben, wobei in dem zu deponierenden oder anderweitig verwendbaren Endprodukt kein Asbest mehr enthalten sein soll.

Diese Aufgabe wird erfindungsgemäß dadurch gelößt, daß die Mahlung in Form einer Feinstmahlung gemeinsam mit wenigstens einem in Wasser OH⁻-Ionen freisetzenden Stoff in wäßriger Suspension erfolgt. Dabei wird das Asbestmaterial in ein Material mit mineralischen Phasen überführt, die von der Mineralphase des Asbestes verschieden sind, wobei die Umwandlung irreversibel ist. Als Endprodukt des Verfahrens entsteht eine Suspension feinkristalliner und gelförmiger Stoffe, die keine Faserstruktur aufweisen. Die erfindungsgemäße Naßmahlung führt in relativ kurzer Zeit zur Umlagerung des Asbestes oder des asbesthaltigen Materials. Nach einer Mahlzeit von z.B. 30 Minuten ist Asbest mit dem Röntgendiffraktometer und dem Rasterelektronenmikroskop nicht mehr nachweisbar. Besonders vorteilhaft ist es auch, daß durch den vollständig in wäßriger Suspension durchgeführten Prozeß keine Staubentwicklung eintreten kann. Dadurch wird eine Gefährdung von Personal und Umwelt ausgeschlossen. Zudem ist es sehr vorteilhaft, daß keine gasförmigen Produkte entstehen, so daß keinerlei Abgasprobleme auftreten.

Als besonders vorteilhaft hat sich die Verwendung von Calciumhydroxid und/oder eines Alkalihydroxids für die in Wasser OH⁻-Ionen freisetzenden Stoffe herausgestellt. Auch ist gefunden worden, daß die Feinstmahlung in der wäßrigen Suspension und die schnelle Veränderung der Kristallgitterstruktur des Asbest-Ausgangsmaterials bei Verwendung eines aus Calciumhydroxid und wenigstens einem weiteren, in Wasser OH⁻-Ionen freisetzenden Stoff bestehenden Gemisches verfahrenstechnisch besonders günstig ausführbar sind.

Hinsichtlich einer sehr schnell wirksamen Änderung der Asbest-Kristallgitterstruktur, wobei dadurch gleichzeitig chemische Reaktionen eingeleitet und zum Ablauf gebracht werden, ist auch gefunden worden, daß es sehr vorteilhaft ist, wenn das Gewichtsverhältnis des umzuwandelnden Asbest-Ausgangsproduktes zu dem in Wasser OH⁻-Ionen freisetzenden Stoff oder Stoffgemisch ca. 1:1 beträgt.

Gemäß einer besonders zweckmäßigen und sehr vorteilhaften Ausführung des erfindungsgemäßen Verfahrens wird das in wäßriger Suspension erhaltene sehr feine Mahlprodukt in einen Autoklaven überführt und in diesem bei erhöhtem Druck und erhöhter Temperatur behandelt. Die Beschickung des Autoklaven mit der wäßrigen Suspension ist verfahrenstechnisch besonders einfach ausführbar und erlaubt einen niedrig hydrothermalen Autoklavprozeß. Diese anschließende Autoklavenbehandlung der aus der Mahlung anfallenden Suspension unterstützt und beschleunigt die bereits in der Suspension bei der Feinstmahlung stattfindende chemische Umsetzung. Insbesondere ist es gelungen, Amphibol-Asbeste, die um ein Mehrfaches gesundheitsgefährdender als Chrysotil sind, durch die Nachbehandlung mit dem Autoklaven in relativ kurzer Zeit in vollständig gefahrlose Produkte umzusetzen. Die Behandlungsdauer in dem Autoklaven liegt im Bereich von einigen Minuten bis hin zu einigen Stunden. Ausgezeichnete Ergebnisse des Autoklavprozesses sind bei Temperaturen von 250 - 260° C und korrespondierenden Drucken von ca. 40 bar erzielt worden. Die Behandlungsdauer hat dabei ca. 30 Minuten betragen. Amphibole oder Chrysotil sind mit dem Röntgendiffraktometer nicht mehr nachweisbar. Auch mit dem Rasterelektronenmikroskop sind faserförmige Anteile nicht nachweisbar. Autoklavenverfahren als solche zur Behandlung von Asbest sind an sich zur Herstellung von Asbestzementprodukten bekannt (Silikattechnik, Bd. 35, Nr. 5, 1984, Berlin DD, Seiten 140 - 142, C. Wieker "Chemische, elektronenmikroskopische und röntgenographische Untersuchungen an Chrysotil-Asbest-Proben). Die dort angegebene hydrothermale Behandlung von Chrysotil in wäßriger Suspension in Anwesenheit von Ca(OH)₂ betrifft im wesentlichen Unterschied zu der Erfindung keine Maßnahmen zur Asbestentsorgung, sondern vielmehr Analysen zur Herstellung eines Chrysotil-Zement-Gemisches, wobei die gesundheitsgefährdenden Chrysotilfasern selbst nach einer Behandlungsdauer von bis zu 13 Tagen nicht vollständig abgebaut werden.

Wenn man erheblich längere Behandlungszeiten in Kauf nehmen will, besteht eine erfindungsgemäße Verfahrensausführung mit Nachbehandlung auch darin, die aus der Mahlung anfallende Suspension einer offenen Behältereinrichtung zuzuführen, in der die Nachbehandlung der Suspension drucklos bei Siedetemperatur erfolgt.

Zur näheren Erläuterung der Erfindung und damit erzielbarer Vorteile werden nachstehend besonders geeignete Ausführungsbeispiele des erfindungsgemäßen Verfahrens beschrieben.

Zur Durchführung der erfindungsgemäßen Feinstmahlung wird vorzerkleinerter Asbest bzw. vorzerkleinertes asbesthaltiges Material mit Wasser und wenigstens einem in Wasser OH⁻-Ionen freisetzenden Stoff einer Mühle zugeführt. Als Mahlvorrichtungen eignen sich Mühlen, die das Mahlgut mit hoher Mahlenergie beaufschlagen. Bei Versuchen hat sich herausgestellt, daß Rohr-/Trommelmühlen, Perlmühlen und Schwingmühlen diesem Erfordernis besonders gut genügen. Besonders günstige Mahlergebnisse werden mit Schwingmühlen erreicht. Es werden folgende Beispiele angegeben:
A) 100 g reiner Chrysotilasbest werden mit 500 ml Wasser und 100g Calciumhydroxid in einer Rohrschwingmühle 30 Minuten gemahlen. Die Suspension wird in einen Autoklaven überführt und 30 Minuten bei 260° C behandelt.
   Die erhaltene Suspension ist fließfähig. In der Röntgenstrukturanalyse ist Chrysotil nicht mehr erkennbar. Auch die Rasterelektronenmikroskop-Aufnahme weist keine faserförmigen Bestandteile aus.
B) 100 g Blauasbest (Krokydolith) werden, wie in dem Beispiel A beschrieben, behandelt. In dem Endprodukt sind mit dem Röntgendiffraktometer außer Linien des Portlandits (Ca (OH)₂) keine mineralischen Phasen identifizierbar. Die rasterelektronenmikroskopische Aufnahme zeigt keine faserförmigen Bestandteile.
C) 100g Braunasbest (Amosit) werden wie in dem Beispiel A behandelt.
   Die Ergebnisse sind gleich denen des Beispiels B.
D) 100 g Baustoff-Asbestzement werden wie in dem Beispiel A behandelt.
   Die Ergebnisse sind gleich denen des Beispiels A.
E) 100 g Spritzasbest werden mit 500 ml Wasser und 100g Nariumhydroxid 30 Minuten gemahlen. Die Suspension wird 30 Minuten im Autoklaven bei 250° C und 40 bar behandelt. Mit dem Röntgendiffraktometer sind keine Asbestmineralphasen nachweisbar. Auch mit dem Rasterelektronenmikroskop sind faserförmige Anteile nicht nachweisbar.

## Patentansprüche

1. Verfahren zur Entsorgung von Asbest oder asbesthaltigen Stoffen, wobei der Asbest oder die asbesthaltigen Stoffe durch Mahlung in ein nichtfaserige, stabile, mineralische Phasen aufweisendes Material umgewandelt werden, **dadurch gekennzeichnet,** daß die Mahlung in Form einer Feinstmahlung gemeinsam mit wenigstens einem in Wasser OH⁻-Ionen freisetzenden Stoff in wäßriger Suspension erfolgt.

2. Verfahren nach Anspruch 1, **dadurch gekennzeichnet,** daß als in Wasser OH⁻-Ionen freisetzender Stoff Calciumhydroxid und/oder ein Alkalihydroxid verwendet wird.

3. Verfahren nach Anspruch 1 oder 2, **dadurch gekennzeichnet,** daß die Feinstmahlung gemeinsam mit einem Gemisch erfolgt, das aus Calciumhydroxid und wenigstens einem weiteren, in Wasser OH⁻-Ionen freisetzenden Stoff besteht.

4. Verfahren nach einem der Ansprüche 1 bis 3, **dadurch gekennzeichnet,** daß das in wäßriger Suspension erhaltene Mahlprodukt in einen Autoklaven überführt und in diesem bei erhöhtem Druck und erhöhter Temperatur behandelt wird.

5. Verfahren nach einem der Ansprüche 1 bis 3, **dadurch gekennzeichnet,** daß das umzuwandelnde Ausgangsprodukt aus einen Amphibol-Asbest besteht und daß das in wäßriger Suspension erhaltende Mahlprodukt in einen Autoklaven überführt und in diesem bei erhöhtem Druck und erhöhter Temperatur behandelt wird.

6. Verfahren nach Anspruch 4 oder 5, **dadurch gekennzeichnet,** daß die Behandlungsdauer in dem Autoklaven im Bereich von einigen Minuten bis hin zu einigen Stunden liegt, vorzugsweise jedoch im Bereich von 30 Minuten.

7. Verfahren nach einem der Ansprüche 1 bis 3, **dadurch gekennzeichnet,** daß das in wäßriger Suspension erhaltene Mahlprodukt drucklos bei Siedetemperatur nachbehandelt wird.

8. Verfahren nach einem der Ansprüche 1 bis 7, **dadurch gekennzeichnet,** daß das Gewichtsverhältnis des umzuwandelnden Asbest-Ausgangsproduktes zu dem in Wasser OH⁻-Ionen freisetzenden Stoff oder Stoffgemisch ca. 1:1 beträgt.

## Claims

1. Method for the disposal of asbestos or material containing asbestos, wherein the asbestos or asbestos containing materials are transformed by grinding into a material which comprises non-fibrous, stable, mineral phases, **characterized in** that the grinding is carried out in the form of a pulverizing in an aqueous suspension, together with at least one substance which in water releases OH⁻-ions.

2. Method according to claim 1, **characterized in** that calcium hydroxide and/or an alkali hydroxide are used as substances that release OH⁻-ions in water.

3. Method according to claim 1 or 2, **characterized in** that the pulverizing takes place together with a mixture which consists of calcium hydroxide and at least one other substance that releases OH⁻-ions in water.

4. Method according to any one of the claims 1 to 3, **characterized in** that the ground product obtained in aqueous suspension is transferred to an autoclave and is treated therein at an increased pressure and increased temperature.

5. Method according to any one of the claims 1 to 3, **characterized in** that the starting product to be transformed consists of an amphibole asbestos and that the ground product obtained in aqueous suspension is transferred to an autoclave and is treated therein at an increased pressure and increased temperature.

6. Method according to claim 4 or 5, **characterized in** that the treatment time in the autoclave lies in the range from a few minutes to a few hours but, preferably around 30 minutes.

7. Method according to any one of the claims 1 to 3, **characterized in** that the ground product obtained in aqueous suspension is subjected to an after-treatment unpressurized at boiling temperature.

8. Method according to any one of claims 1 to 7, **characterized in** that the mass ratio of the asbestos starting product to be transformed to the substance or substance mixture that releases OH⁻-ions in water is about 1:1.

## Revendications

1. Procédé pour éliminer l'amiante ou des substances contenant de l'amiante, où l'amiante ou les substances contenant de l'amiante sont, par broyage, convertis en un matériau non fibreux, stable, comportant des phases minérales, caractérisé en ce que le broyage est effectué en suspension aqueuse sous forme d'un broyage très fin, en même temps qu'au moins une substance libérant dans l'eau des ions OH⁻.

2. Procédé selon la revendication 1, caractérisé en ce qu'on utilise comme substance libérant dans l'eau des ions OH⁻ l'hydroxyde de calcium et/ou un hydroxyde d'un métal alcalin.

3. Procédé selon la revendication 1 ou 2, caractérisé en ce que le broyage très fin s'effectue en commun avec un mélange qui est constitué d'hydroxyde de calcium et d'au moins une autre substance libérant dans l'eau des ions OH⁻.

4. Procédé selon l'une des revendications 1 à 3, caractérisé en ce que le produit broyé obtenu en suspension aqueuse est transvasé dans un autoclave, et y est traité sous haute pression et à haute température.

5. Procédé selon l'une des revendications 1 à 3, caractérisé en ce que le produit de départ à convertir est constitué d'un amiante de type amphibole, et que le produit broyé obtenu en suspension aqueuse est transvasé dans un autoclave et y est traité sous haute pression et à haute température.

6. Procédé selon la revendication 4 ou 5, caractérisé en ce que la durée du traitement dans l'autoclave est compris dans l'intervalle de quelques minutes à quelques heures, mais de préférence est de l'ordre de 30 minutes.

7. Procédé selon l'une des revendications 1 à 3, caractérisé en ce que le produit broyé obtenu en suspension aqueuse est soumis à un traitement ultérieur sans pression à la température d'ébullition.

8. Procédé selon l'une des revendications 1 à 7, caractérisé en ce que le rapport en poids de l'amiante de départ à convertir à la substance ou au mélange de substances libérant dans l'eau des ions OH⁻ est d'environ 1:1.
